# EUROPEAN PATENT APPLICATION

(11) **EP 2 878 819 A2**
(43) Date of publication of application: **03.06.2015**
(21) Application number: 14382473.8
(22) Date of filing: 26.11.2014
(51) Int. Cl.: F04B 17/04, F04B 43/04

(54) **REAR ELECTROMAGNET SUITABLE FOR VIBRATING PUMPS AND VALVES**

(30) Priority: 28.11.2013 ES 201331369 U; 05.03.2014 ES 201430294 U
(71) Applicant: Teylor Intelligent Processes SL, 08034 Barcelona (ES)
(72) Inventor: TEYLOR, ADRIAN, 08034 BARCELONA (FR)

(57) **Abstract**

This invention concerns a rear electromagnet suitable for vibrating pumps and electrical valves. The rear electromagnet, increase the efficiency of the magnetic system due to its particular position, which exerts a direct attractive force over the ferritic core of the pump or valve.

The magnetic system with a rear electromagnet is an optimized drive method for vibrating pumps by moving the ferritic core (2) extended in a pumping means (21, 22) acting in a compression chamber (1) provided with a liquid inlet (11) and an liquid outlet (12).

The magnetic system with a rear electromagnet is as well an optimized drive method for electric solenoid valves. It is suitable to move the control membrane (2) with a ferritic core (3) that open and closes de passage of the liquid from the inlet (6) to the outlet (7) by acting over the seat (10) inside the working chamber (1).

## Description

### Subject of the invention

This invention concerns a rear electromagnet suitable for vibrating pumps and electrical valves. The vibrating pumps are used to move liquids consisting of a piston or membrane related to a ferritic core and alternately activated by a magnetic system, which pushes the liquid in a compression chamber towards an outlet. The electrical valves are used to control the flow of liquids through a hydraulic circuit and are also managed by a magnetic system which move a ferritic core to open and close the valve.

The rear electromagnet for vibrating pump and electrical valves, which is the subject of this invention, has features intended to increase the efficiency of the magnetic system due the particular position of the electromagnet in order to exert a direct attractive force over the ferritic core, to obtain the same performances as the tubular models with less copper, iron and consume less electricity.

### State of the art

Different types of pressure pump used for moving liquids from one point to another are currently known. Gear pumps, centrifuge pumps, vane pumps, vibrating pumps and others might be mentioned. Concerning the electrical valves there are two main types, direct and indirect action.

Vibrating pumps or electrical valves, which are the type referred to in this invention, work by moving a ferritic core with the use of an tubular electromagnet operating around the said core. The use of electricity to power the electromagnet produce magnetic pulses that attracts the ferritic core, which in turns move from a rest position to a new centred position within the magnetic field produced by the electromagnet, and a spring rear to the core serves to push it back away to its initial position producing the movement thereof.

The magnetic system currently used in vibration pumps and electrical valves has low efficiency due to the use of a tubular electromagnet disposed around the ferritic core, which excite the core making it to moves to the centred position of the magnetic field instead of directly attracting it.

The technical problem raised is therefore to develop a magnetic system that improves the attraction force over the ferritic core, either of a vibratory pump or an electrical valve, thereby enabling to obtain the same strength with a reduced quantity of raw material, mainly the copper needed for the manufacture of the coil, as well as reducing the size of the electromagnet.

### Description of the invention

The magnetic system, which is the subject of this invention and of the same type as those mentioned above, provide a new and improved magnetic performance for its utilization as a drive force for vibrating pumps and electrical valves. It has various features, in accordance with the claims, making it possible to solve the problems set out above and provides several usage and manufacturing benefits.

For vibratory pumps and electrical valves the magnetic system is particular in the fact that the electromagnet is arranged behind and axially aligned to the ferritic core of the device, improving the attraction force while reducing the amount of copper and iron required for manufacturing the device, as well as the cost and the size of the assembly.

The arrangement of the electromagnet rear of the ferritic core, therewith provides higher efficiency by directly attracting the ferritic core of the device towards, rather than centring the said core within the magnetic field produced by a tubular electromagnet arranged around it, as it is used in the present.

The features of the invention could be understood more easily by looking at the example version shown in the attached diagrams.

### Description of the diagrams

To complete the description made, and in order to make easier to understand the features of the invention, this report is accompanied by a set of drawings, which are merely illustrative and not restrictive, representing the following:
- Figure 1 shows a schematic drawing of an example of the vibrating pump for liquids in accordance with the invention, sectioned by a vertical plane and a membrane as the pumping means; and
- Figure 2 shows a schematic drawing of a variant of the vibrating pump for liquids in accordance with the invention, sectioned by a vertical plane and a piston as the pumping means; and
- Figure 3 shows a schematic drawing of a normally closed variant of the electrical valve for liquids in accordance with the invention, sectioned by a vertical plane; and
- Figure 4 shows a schematic drawing of a normally open variant of the electrical valve for liquids in accordance with the invention, sectioned by a vertical plane;

### Preferred version of the invention

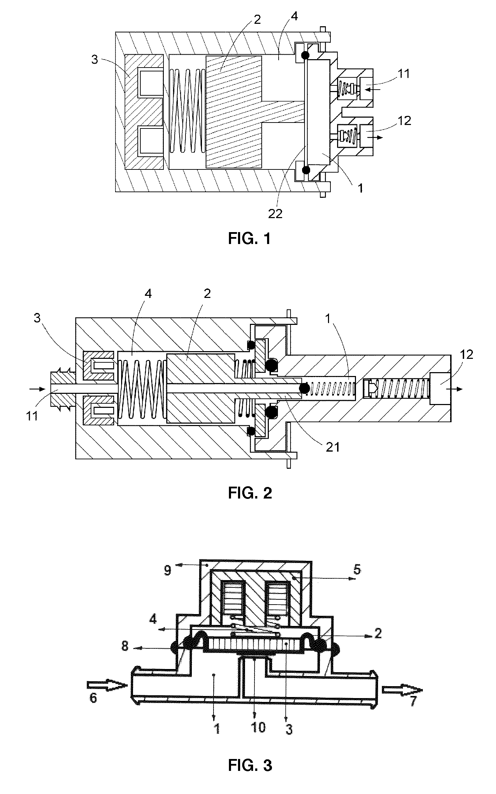

In the example version shown in figure 1, the vibrating pump for liquids includes a compression chamber (1) provided with a liquid inlet (11) and a liquid outlet (12) with the corresponding one-way valves which determine the flow of fluid in the direction input-output; and pumping means constituted in this case by a membrane (22) linked to the ferritic core (2) and housed between the cavity (4) and the compression chamber (1).

The pump comprises a magnetic system equipped with a rear electromagnet (3) suitable to move the magnetic core (2) longitudinally and in alternative direction through the interior of the cavity (4).

According to the invention, and as shown in the figure, the electromagnet (3) of the magnetic system is arranged behind the ferritic core (2) of the vibrating pump and axially aligned therewith.

In the example version shown in figure 2, the vibrating pump for liquids includes a compression chamber (1) provided with a liquid inlet (11) and a liquid outlet (12) with the corresponding one-way valves which determine the flow of fluid in the direction input-output; and pumping means constituted in this case by a piston (21) linked to the ferritic core (2) housed in the cavity (4).

As in the previous example the rear electromagnet (3) of the magnetic system, in charge of moving the magnetic core (2) longitudinally and in alternative direction through the interior of the cavity (4) is arranged behind the ferritic core (2) of the vibrating pump and axially aligned therewith.

In the embodiment shown in Figure 3, the normally closed electric valve for liquids include a working chamber (1) provided with a liquid inlet (6), a sealing seat (10) and a liquid outlet (7); a control means constituted by a membrane (2) with a ferritic core (3) housed between the working chamber (1) and the magnetic system (9) that closes the passage of the liquid sealing over the seat (10).

The valve comprises a magnetic drive system equipped with a rear electromagnet (5) to move back the control membrane (2) in the longitudinal direction through the interior of the working chamber (1) compressing the spring (4) which returns back the control membrane (2) to close the flow over the seat (10) when the rear electromagnet (5) is not energized.

The control membrane (2) serves as sealing means between the working chamber (1) and the magnet system (9) connected mechanically or by a welding process (8) such as ultrasonic.

According to the invention and as shown in Figure 3 the electromagnet (5) of the magnetic system (9) is arranged behind the ferritic core (3) and axially aligned therewith.

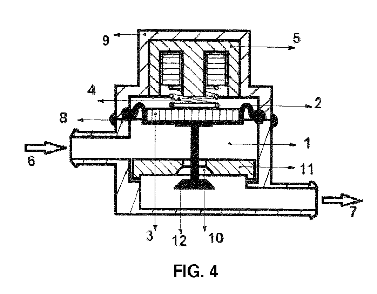

In the embodiment shown in Figure 4 the normally open electric valve for liquids is constituted by a membrane (2) with a ferritic core (3) extended in a plunger (12) closing the flow of the liquid over the seat (10).

As in the previous examples, the electromagnet (5) of the magnetic system, in charge of moving the membrane (2) in the longitudinal direction through the interior of the working chamber (1), is arranged behind the ferritic core (3) and axially aligned therewith.

Having described the nature of the invention sufficiently, as well as a preferred version, it is stated for the appropriate purposes that the materials, shape, size and arrangement of the elements described can be changed, provided this does not involve an alteration of the essential features of the invention claimed below.

## Claims

1. Vibrating pump for liquids; applicable in the displacement of fluid; and comprising a compression chamber (1) provided with a liquid inlet (11) and an liquid outlet (12); the pumping mean (21, 22) associated with a ferritic core (2), and a magnetic drive system with an adequate electromagnet to move in the longitudinal direction and alternated sense the ferritic core (2) inside a cavity (4); **characterized in that**: the electromagnet (3) of the magnetic system is arranged behind the ferritic core (2) and axially aligned therewith.

2. Vibrating pump according to claim 1, **wherein** the pumping means is constituted by a piston (21) housed in the compression chamber (1).

3. Vibrating pump according to claim 1, **wherein** the pumping means is constituted by a membrane (22) arranged between the cavity (4) where the ferritic core (2) moves and the compression chamber (1)

4. Electric solenoid valve for liquids; applicable to control the flow of liquids; and comprising a working chamber (1) provided with an liquid inlet (6), a sealing seat (10) and an liquid outlet (7); of a control membrane (2) with a ferritic core (3) that closes the passage of liquid acting over the seat (10); a magnetic drive system (9) provided with an electromagnet (5) suitable to move in longitudinal direction the control membrane (2) inside the working chamber (1) compressing a spring (4) which returns the membrane control (2) to its closing position over the seat (10) when the power of the electromagnet (5) is interrupted; **characterized in that**: the electromagnet (5) of the magnetic system is arranged behind the ferritic core of the membrane (2) and axially aligned therewith.

5. Electrical solenoid valve for liquids, according to claim 4, **wherein** the control membrane (2) with the ferritic core (3) extends into a sealing piston (12) that closes the passage of the liquid over the seat (10) of the ring (11) closely linked to the working chamber (1) when the rear electromagnet (5) is energized overcoming the force of the spring (4) responsible for returning the membrane (2) to its normally open position when the power is OFF.

6. Electrical solenoid valve for liquids valve according to claim 4, wherein the working chamber (1) and the magnetic system (9) are joined by mechanical clipped or screwed.

7. Electrical solenoid valve for liquids according to claim 4 wherein the working chamber (1) and the magnet system (9) are welded or glued, with or without filler material.
